## Europäisches Patentamt

## European Patent Office

## Office européen des brevets

(19)

(11) Numéro de publication: **0 222 637**
**B1**

(12) **FASCICULE DE BREVET EUROPEEN**

(45) Date de publication du fascicule du brevet:
**21.03.90**

(51) Int. Cl.⁴: **F16G 5/20, F16G 1/28**

(21) Numéro de dépôt: **86402211.6**

(22) Date de dépôt: **06.10.86**

(54) Courroie de transmission de puissance perfectionnée.

(30) Priorité: **29.10.85 FR 8516039**
**21.04.86 FR 8605698**

(43) Date de publication de la demande:
**20.05.87 Bulletin 87/21**

(45) Mention de la délivrance du brevet:
**21.03.90 Bulletin 90/12**

(84) Etats contractants désignés:
**DE ES FR GB IT NL SE**

(56) Documents cités:
**EP-A- 0 060 713**
**EP-A- 0 084 702**
**EP-A- 0 109 990**
**DE-C- 533 398**
**FR-A- 1 099 528**
**FR-A- 1 176 766**
**FR-A- 2 503 305**
**GB-A- 962 956**
**GB-A- 2 077 388**
**US-A- 1 982 869**
**US-A- 3 120 409**

**SOVIET INVENTIONS ILLUSTRATED,**
**semaine 8419, 20 juin 1984, résumé**
**no. 84-119381/19, Derwent Publications Ltd, London,**

(73) Titulaire: **HUTCHINSON S.A., 2 rue Balzac,**
**F-75008 Paris(FR)**

(72) Inventeur: **Zarifé, Victor, La Loge Chateau de Varenne,**
**F-45220 Saint-Germain des Pres(FR)**
Inventeur: **Argy Gilles, 15 ter, Rue Nationale, F-78940 La**
**Queue en Yvelines(FR)**
Inventeur: **Cheymol, André, 15, route de Descartes,**
**F-86220 Dangé(FR)**

(74) Mandataire: **Orès, Bernard et al, Cabinet**
**ORES 6, Avenue de Messine, F-75008 Paris(FR)**

(56) Documents cités: (suite)
**GB; & SU-A-10 33 794 (BELORUSSIAN**
**POLY) 07-08-1983**
**SOVIET INVENTIONS ILLUSTRATED, section**
**mécanique, semaine 8442, 28 novembre 1984, résumé**
**no. 84-261645/42, Derwent Publications Ltd, London,**
**GB; & SU-A-10 73 511 (BELORUSSIAN**
**POLY) 15-02-1984**

## Description

L'invention a pour objet une courroie de transmission de puissance perfectionnée.

Elle vise, en particulier, une telle courroie à section droite trapézoïdale et à flancs nus propre à être utilisée en tant qu'organe de transmission de puissance entre deux organes tournants, dont l'un est solidaire d'un arbre mené et l'autre d'un arbre menant, par exemple, dans des ensembles de boîtes de vitesses ou de variateurs mécaniques d'automobiles.

On a déjà proposé de réaliser de telles courroies, en une matrice de matériau élastomère armée par une couche de câbles en fibres textiles ou en fils métalliques et, lorsque des caractéristiques spéciales de flexibilité de la courroie sont recherchées, ou dans certaines réalisations prévues pour de faibles diamètres d'enroulement, on prévoit un crantage transversal sur la face interne, c'est-à-dire celle qui est la plus proche des axes des organes tournants.

De telles courroies connues, qui sont fabriquées soit par injection, soit par assemblage de couches d'élastomère, de câblés et de tissu caoutchouté, doivent satisfaire, en utilisation, à des exigences parfois contradictoires.Elles doivent, en particulier, supporter pendant des durées importantes différents états de contrainte, présenter un haut module d'élasticité en traction, un faible module d'élasticité en flexion et une résistance mécanique transversale élevée. Cette dernière condition est particulièrement importante étant donné que, en l'absence de rigidité transversale suffisante, la courroie peut s'incurver lors de son fonctionnement, sa section droite gauchir sous la pression des flasques des poulies avec lesquelles elle coopère et ainsi cesser de jouer son rôle de transmission de puissance.

Ces phénomènes sont encore accentués dans les dispositifs qui nécessitent la transmission d'une puissance élevée, par exemple supérieure à une dizaine de kilowatts.

Pour tenter de résoudre le problème posé, qui est celui de la transmission d'une puissance élevée, tout en conservant les avantages des réalisations usuelles à flancs nus, c'est-à-dire un fonctionnement silencieux, une bonne adhérence, un bon rendement de transmission et une durée de vie satisfaisante, de même que les bonnes qualités de flexibilité et de souplesse, de tenue à la chaleur, d'amortissement des vibrations et de faible encombrement rendues possibles par le crantage transversal interne, on a déjà proposé d'augmenter la rigidité transversale desdites courroies plutôt que d'augmenter leurs surfaces latérales de contact, ce qui conduirait au même résultat mais constitue une solution qui ne peut être retenue pour les questions d'encombrement.

Pour l'obtention de la rigidité transversale accrue recherchée on a déjà suggéré l'adjonction au mélange caoutchouteux constitutif de la matrice de courtes fibres uniformément dispersées et orientées pour la plupart dans le sens transversal de la courroie, de façon à obtenir un mélange anisotrope ayant un module plus élevé dans le sens transversal que dans le sens longitudinal, ou radial. Dans une telle solution, toutefois, la valeur de la rigidité transversale qui peut être obtenue est limitée par le fait que la proportion de fibres courtes naturelles ou synthétiques ne peut dépasser environ 30 % en volume, valeur au delà de laquelle on aboutit rapidement à une perte de la cohésion de l'ensemble matrice caoutchoutique-fibres.

Aussi, d'autres propositions ont-elles été avancées pour accroître la rigidité transversale de telles courroies et, notamment, l'introduction de renforts constitués par des nappes de câblés textiles orientés transversalement ou de tissus en fibres synthétiques ou naturelles disposés de part et d'autre de la couche de câblés constitutifs du support de traction. Des propositions de ce type sont montrées dans FR-A 2 503 305, EP-A 0 060 713, FR-A 2 484 037 et EP-A 0 109 990 ; elles ne fournissent pas non plus la solution complète au problème posé en ce qu'elles ne donnent pas la rigidité transversale nécessaire suffisante à la courroie, même si les renforts sont parfaitement intégrés à l'élastomère constitutif de la matrice.

D'autres renforts, par exemple ceux décrits dans EP-A 0 084 702 sont placés dans les crans, c'est-à-dire suivant la direction transversale de la courroie. Ils sont constitués par des pièces plates, généralement superposées, disposées parallèlement à la base de la courroie et sont réalisées en métal ou en un matériau synthétique du type résine. De tels renforts ne sont pas non plus entièrement satisfaisants et cela parce qu'ils créent, de par leur forme plate, des zones d'amorce de fissures dans les crans de la courroie d'une part et, d'autre part, favorisent l'apparition de zones de délaminage aux interfaces de leurs liaisons à la matrice d'élastomère.

Pour écarter ce dernier inconvénient, EP-A 0 084 702 propose d'ailleurs de renforcer les crans de la courroie par des inserts rigides à section droite pleine ou à section droite tubulaire. La rigidité transversale nécessaire à la bonne tenue en compression de la courroie est alors obtenue mais au détriment de la souplesse longitudinale indispensable pour qu'elle puisse supporter sans endommagement, par rupture de la cohésion à l'interface des inserts et de la matrice d'élastomère, les flexions auxquelles elle est soumise au cours de l'utilisation.

En outre, lorsque les inserts mis en oeuvre sont des profils tubulaires à section droite de polyèdres comme des carrés, des triangles, etc ... les arêtes des inserts correspondant aux sommets des polyèdres, en particulier celles disposées en partie haute des crans,-c'est-à-dire au voisinage de la ceinture de câbles-, provoquent la création de zones de concentration de contraintes qui entraînent l'endommagement de l'élastomère constitutif de la matrice par fissuration de celui-ci avec, pour résultat, une diminution sensible de la durée de vie et des caractéristiques de telles courroies.

A partir de cet état de la technique, la Demanderesse s'est donnée pour but de fournir une courroie trapézoïdale crantée du type de celles mentionnées ci-dessus, c'est-à-dire dans laquelle la rigidité transversale est obtenue à l'aide d'inserts prévus dans les crans de la courroie mais qui ne présente pas les inconvénients des dispositifs de l'art antérieur connus.

C'est, en particulier, un but de l'invention de fournir une telle courroie trapézoïdale crantée qui permette la transmission de puissances élevées sans, toutefois, qu'il ne soit porté atteinte à sa souplesse longitudinale.

C'est, encore, un but de l'invention de fournir une telle courroie dont la durée de vie soit aussi grande, sinon plus que celle des courroies antérieurement connues.

C'est, aussi, un but de l'invention de fournir une telle courroie dont la fabrication puisse être réalisée sans difficultés, et de manière sensiblement analogue à celle des courroies connues, de sorte qu'elle n'entraîne pas la création d'outils et/ou d'appareillages spéciaux et de coût élevé.

Une courroie trapézoïdale crantée selon l'invention, comprenant un corps formé d'une matrice en élastomère dans laquelle est noyée une couche de câbles métalliques ou de fils câblés en matières textiles, naturelles ou synthétiques servant de support de traction, et à l'intérieur des crans, des renforts dirigés sensiblement transversalement par rapport à la courroie est caractérisée en ce que lesdits renforts ont, en section droite, une forme "ouverte" quelque peu analogue à une gouttière à bords libres roulés, ou partiellement rabattus et déformable dans le sens longitudinal de la courroie.

Dans le cas de bords roulés, ou de bords partiellement rabattus, lesdits rebords ou rabats sont dirigés vers l'extérieur de la gouttière.

En variante, lesdits rebords ou rabats sont au contraire disposés vers l'intérieur de la gouttière.

Dans une forme de réalisation, ladite gouttière présente des faces latérales et/ou de fond qui sont elles-mêmes nervurées, ou ondulées, pour accroître la rigidité transversale de la courroie dans laquelle sont insérés les renforts conformés suivant ladite gouttière.

Quelle que soit la configuration exacte des renforts, ceux-ci sont avantageusement placés dans chacun des crans de la courroie avec leurs faces latérales sensiblement parallèles aux flancs des crans dans lesquels ils sont incorporés.

Dans une forme de réalisation, la partie "ouverte" du renfort est disposée de manière à faire face à l'extérieur de la courroie, de sorte que le fond du renfort est au voisinage de l'intérieur de la courroie, c'est-à-dire près de la base de petites dimensions des crans.

Dans une autre forme de réalisation, la disposition est inverse de celle décrite immédiatement ci-dessus, c'est-à-dire que l'ouverture du renfort est dirigée vers l'intérieur de la courroie.

La longueur des renforts est de préférence choisie de manière à être inférieure ou sensiblement égale à la longueur des crans.

En outre, les renforts sont placés dans les crans de manière à ménager,-tant au niveau des crans eux-mêmes que dans la zone de raccord de ceux-ci au corps de la courroie-, des épaisseurs de matériau élastomère suffisantes pour que ne soit pas mise en cause la cohésion mécanique de la matrice en ledit matériau.

Les travaux conduits par la Demanderesse ont montré qu'un large éventail de possibilités est ouvert en ce qui concerne la nature et l'épaisseur des renforts choisis en fonction de la rigidité transversale requise pour la transmission souhaitée d'une puissance donnée.

Ainsi, ces renforts peuvent être du type métallique, par exemple en acier inoxydable, en aluminium ou en alliage d'aluminium, en alliage cuivreux, etc ...

Ils peuvent également être constitués par des produits non métalliques,par exemple des produits obtenus par façonnage de résines synthétiques ou de résines et de fibres naturelles et/ou synthétiques.

Dans encore une autre variante, lesdits renforts sont des matériaux composites, à pluralité de couches solidarisées entre elles, par exemple un lamifié formé d'un tissu à fibres naturelles et/ou synthétiques, d'un élastomère et d'un feuillard métallique.

Quelle que soit la réalisation des renforts il s'est avéré avantageux d'introduire dans les bords libres roulés ou partiellement rabattus desdits renforts, des inserts s'étendant sensiblement d'un flanc à l'autre de ladite courroie.

Il a été observé que la mise en place de ces inserts dans les bords libres roulés ou partiellement rabattus des renforts s'opposait à la déformation de ces derniers, de sorte que la rigidité transversale de la courroie était encore améliorée sans qu'il soit porté atteinte à sa souplesse longitudinale.

La forme et les dimensions des inserts sont choisies en correspondance des dimensions des bords libres roulés ou partiellement rabattus des renforts et lesdits inserts ont de préférence une section droite à contour circulaire ou polygonal.

La matériau constitutif des inserts est choisi pour ses propriétés de résistance mécanique et peut être constitué par des fils métalliques, comme des cordes à piano ou des câblés métalliques tressés, ou des câblés en fibre synthétique comme ceux connus sous la marque KEVLAR (une marque déposée de DUPONT DE NEMOURS) ou encore des cordes de caoutchouc ou d'autres élastomères. Pour leur fixation dans les renforts des crans de la courroie, les inserts sont avantageusement enrobés d'agent de collage ou de dissolution de caoutchouc.

Si l'on souhaite, par contre, ne pas s'opposer à la déformation de la matrice en élastomère dans le sens radial, c'est-à-dire à l'écrasement de la courroie lors de son enroulement dans les poulies avec les-

EP 0 222 637 B1

quelles elle coopère, il est avantageux de constituer les renforts à l'aide d'organes bandulaires à bords roulés ou partiellement rabattus ayant en section droite par un plan longitudinal une forme générale d'agrafe en C ou de crochet en S dont l'âme centrale est inclinée sur la direction de la couche servant de support de traction.

Avec une telle disposition, dans laquelle les renforts ne présentent pas de partie s'étendant parallèlement à la couche de support de traction il n'y a pas d'obstacle à une déformation dans le sens radial de la matrice en élastomère.

Les renforts sont de préférence disposés de manière que l'âme centrale du renfort à section droite en forme générale d'agrafe en C ou de crochet en S soit sensiblement parallèle à une face latérale du cran dans lequel il est incorporé.

Dans une réalisation avantageuse, les renforts bandulaires sont associés par pairesdans chacun des crans et l'âme centrale d'un renfort à section droite en C ou à section droite en S est disposée sensiblement parallèlement à la face latérale du cran à laquelle il est adjacent.

Dans une variante, l'âme centrale du renfort à section droite en C ou en S est disposée sensiblement parallèlement à la face latérale du cran dont elle est le plus distante.

Dans une variante, bien appropriée à la réalisation de courroies à crans relativement grands, une multiplicité de renforts bandulaires par exemple trois ou davantage sont prévus dans chacun desdits crans.

L'invention sera bien comprise par la description qui suit, faite à titre d'exemple et en référence au dessin annexé dans lequel :

- la figure 1 est une vue schématique, en élévation, d'une courroie de transmission de puissance équipant un ensemble mécanique ;
- la figure 2 est une vue partielle, en coupe et à plus grande échelle selon la ligne 2-2 de la figure 1 ;
- la figure 3 est une vue partielle, en perspective, d'une courroie crantée perfectionnée selon l'invention, pour une première forme de réalisation ;
- la figure 4 est une vue analogue à celle de la figure 2, mais pour une variante et un autre ensemble mécanique ;
- la figure 5 est une vue schématique partielle, en élévation, d'un cran de courroie selon l'invention ;
- la figure 5a est une vue analogue à la figure 5 mais pour une autre condition d'un cran de la courroie ;
- les figures 6a à 6f illustrent différentes formes de renforts propres à être mis en oeuvre dans une courroie perfectionnée selon l'invention ;
- la figure 7 est une vue en coupe transversale au droit d'un insert d'une autre forme de réalisation ;
- la figure 8 est une vue schématique, de face, et à plus grande échelle d'un cran de courroie perfectionnée selon la figure 7 ;
- la figure 9 est une vue partielle à encore plus grande échelle ;
- la figure 10 est une vue schématique, en perspective, d'une partie de courroie perfectionnée selon l'invention pour encore une autre forme de réalisation ;
- la figure 11 est une vue schématique, de face et à plus grande échelle de deux crans adjacents d'une courroie selon la figure 10 ;
- la figure 12 est une vue analogue à celle de la figure 11 mais pour une variante de réalisation ;
- la figure 13 est une vue analogue aux figures 11 et 12 mais pour une variante ;
- la figure 14 est une vue analogue aux trois précédentes mais pour une autre variante.

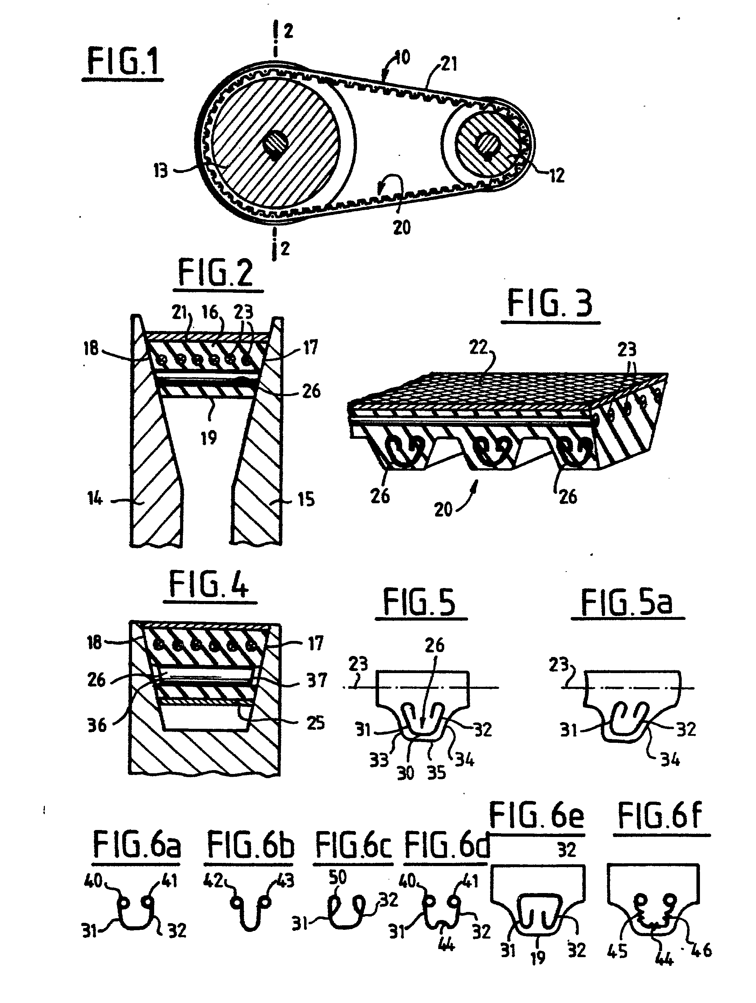

Comme montré sur la figure 1, une courroie trapézoïdale crantée à flanc nus, 10, est prévue comme organe de transmission de puissance entre un organe menant 12 et un organe mené 13 constitué(s) l'un et/ou l'autre par une poulie à flasques 14, 15, fixes ou mobiles en translation et qui appartiennent à un ensemble mécanique comme une boîte de vitesses ou un variateur à rapports de transmission variables susceptible de trouver application dans le domaine de l'industrie automobile.

Dans la forme de réalisation illustrée sur les figures 1, 2 et 3, la courroie 10 comprend une matrice 16 en matériau élastomère comme du caoutchouc naturel (NR), du caoutchouc synthétique comme du polychloroprène, du caoutchoux nitrile, des copolymères styrène-butadiène (SBR), de l'hydrine, etc ... à section droite trapézoïdale et à flancs nus 17 et 18. De façon en soi connue la matrice 16 est découpée sur sa face interne 19 suivant des crans 20 et sa face externe 21 peut être garnie d'une ou de plusieurs couche(s) de tissu caoutchouté 22, par exemple à base de coton enduit de polychloroprène.

Dans une variante, illustrée schématiquement sur la figure 4, la face interne 19 de la courroie trapézoïdale est elle aussi garnie d'un tissu caoutchouté 25 analogue au tissu 22, lorsque celui-ci est présent.

Dans la matrice 16 est noyée une couche de câblés 23, servant de support de traction, et qui peut être constituée à partir de fils métalliques, par exemple en acier, ou à partir de fils en matière synthétique comme des fils de polyester, de kevlar ou de rayonne.

Dans chacun des crans 20 est prévu un renfort 26 destiné à conférer à la courroie la rigidité transversale suffisante pour la transmission de la puissance voulue et, selon l'invention, les renforts 26 sont constitués par des profilés dont la section droite est "ouverte", c'est-à-dire ayant quelque peu la forme de gouttière à bords libres roulés, non roulés ou partiellement rabattus, en métal, en matière synthétique ou en matériau composite, et qui est déformable dans le sens longitudinal de la courroie.

On entend ici, par déformation longitudinale dans le sens de la courroie, une déformation des renforts

4

telle que leurs faces latérales suivent la déformation des crans imposée par la traction de la courroie lors du passage dans la gorge des poulies.

De façon plus précise, et comme montré sur la figure 5, les renforts 26 ont une section droite en forme générale de U, avec un fond 30 et des faces latérales 31 et 32 dont les extrémités sont recourbées, soit vers l'intérieur de la gouttière, comme montré sur la figure 5, soit vers l'extérieur, comme montré sur la figure 6b.

Comme bien visible sur la figure 5, les renforts 26 sont disposés dans les crans 20 de manière que les faces latérales 31 et 32 soient dirigées sensiblement parallèlement aux faces latérales 33 et 34 des crans, tandis que le fond 30 est dirigé sensiblement parallèlement à la face interne 35 desdits crans. Cette disposition, qui est celle de fabrication, est aussi celle de la partie libre de la courroie, alors que dans la condition de passage dans la gorge des poulies la disposition est comme montrée sur la figure 5a dans laquelle le renfort est déformé dans le sens longitudinal de la courroie mais inégalement sur ses deux faces.

La longueur des renforts 26 est inférieure ou sensiblement égale à la largeur de la courroie, les extrémités longitudinales 36 et 37 desdits renforts affleurant les flancs nus 17 et 18, respectivement, de la courroie, comme montré sur la figure 2, ou étant légèrement en retrait par rapport à ceux-ci, comme montré sur la figure 4.

La section droite des renforts 26 peut être comme montrée sur les figures 6a à 6f, sans que ces représentations aient quelque caractère limitatif que ce soit.

Ainsi, les faces latérales 31 et 32 des renforts 26 peuvent être terminées par des roulés 40, 41, logés "à l'intérieur" de la section en U du renfort, figure 6a, ou par des roulés 42 et 43 disposés à "l'extérieur" de la section en U, figure 6b, ou par des rabats 50, dirigés "à l'intérieur de la section en U plutôt que des roulés, figure 6c.

Dans la forme de réalisation montrée sur la figure 6d, où les renforts comprennent des roulés 40 et 41 dirigés vers l'intérieur, on prévoit complémentairement que le fond reliant les faces latérales 31 et 32 soit raidi par une nervure longitudinale 44 alors que de telles nervures 45 et 46 sont prévues non seulement sur le fond du renfort mais également sur les faces latérales dans la réalisation de la figure 6f.

Dans chacune des réalisations décrites ci-dessus, les renforts 26 sont disposés de manière telle que leur fond 30 soit placé au voisinage de la face interne 19 de la courroie, c'est-à-dire que, comme montré sur le dessin, les parties "ouvertes" des renforts sont en regard de la face externe de la courroie.

Une telle disposition n'est cependant pas impérative et, comme montré sur la figure 6e, la partie ouverte des renforts peut être dirigée pour être en regard de la face interne 19 de la courroie, les faces latérales 31 et 32 des renforts étant ici aussi, toutefois, placées sensiblement parallèlement aux faces latérales 33 et 34 des crans 20.

Les renforts 26 peuvent être réalisés en différents matériaux métalliques, comme de l'acier inoxydable, de l'aluminium ou des alliages d'aluminium, ou des alliages cuivreux.

En variante, les renforts 26 sont réalisés à partir de résines synthétiques, pures ou armées de fibres naturelles et/ou synthétiques.

Dans encore une autre variante, le matérieu constitutif des renforts 26 est un lamifié de tissu, élastomère et feuillard métallique.

Quelque soit le matériau constitutif des renforts, son épaisseur est choisie en fonction de la résistance transversale à la compression que l'on souhaite donner à la courroie de transmission de puissance, laquelle résistance est elle-même choisie en fonction de la puissance à transmettre.

Ainsi, pour des renforts 26 en métal de bons résultats sont obtenus avec des pièces dont l'épaisseur est comme définie sur le tableau ci-après.

| **Puissance** Kw | **Epaisseur** (millimètres) | |
|---|---|---|
| | Acier inox | Aluminium |
| 10 à 25 | 3/100 à 1/10 | 1/10 à 3/10 |
| 25 à 50 | 1/10 à 2/10 | 3/10 à 6/10 |
| 50 à 100 | 2/10 à 5/10 | |

Dans le cas de renforts en lamifié, c'est l'épaisseur du feuillard métallique qui est prise en compte pour la détermination de la puissance transmissible.

Dans le cas de renforts non métalliques de bons résultats ont été obtenus pour la transmission d'une puissance d'environ 50 Kw avec un matériau constitué par une résine époxy dans laquelle sont noyées des fibres de verre (25 fils de 2400 tex à 30 % de taux de résine).

La hauteur des renforts 26 est généralement au plus égale à la moitié de l'épaisseur de la courroie et de bons résultats ont été obtenus avec des renforts tels que définis ci-dessus, d'une hauteur comprise entre 4 et 7 millimètres et une distance des faces latérales 31, 32, à mi-hauteur du renfort, comprise entre 3 et 6 millimètres.

La fabrication d'une courroie selon l'invention est réalisée de façon analogue à celle d'une courroie crantée usuelle, c'est-à-dire en confectionnant un manchon sur un mandrin et en découpant ledit manchon à l'aide d'outils qui l'attaquent suivant une incidence de ± 13° pour donner aux flancs de la courroie l'angle voulu de 26°.

Dans une telle fabrication, que fait application d'un mandrin cannelé, on dispose au fond des cannelures du mandrin une fine couche d'élastomère ou une première couche de tissu caoutchouté puis une couche d'élastomère, on rapporte sur ladite couche les renforts 26 préalablement remplis et enrobés d'élastomère, par exemple à l'aide d'une boudineuse, on rapporte ensuite de nouvelles couches d'élastomère, la couche de câblés, de nouvelles épaisseurs d'élastomère et le tissu caoutchouté formant la face externe de la courroie, l'ensemble étant ensuite vulcanisé puis découpé.

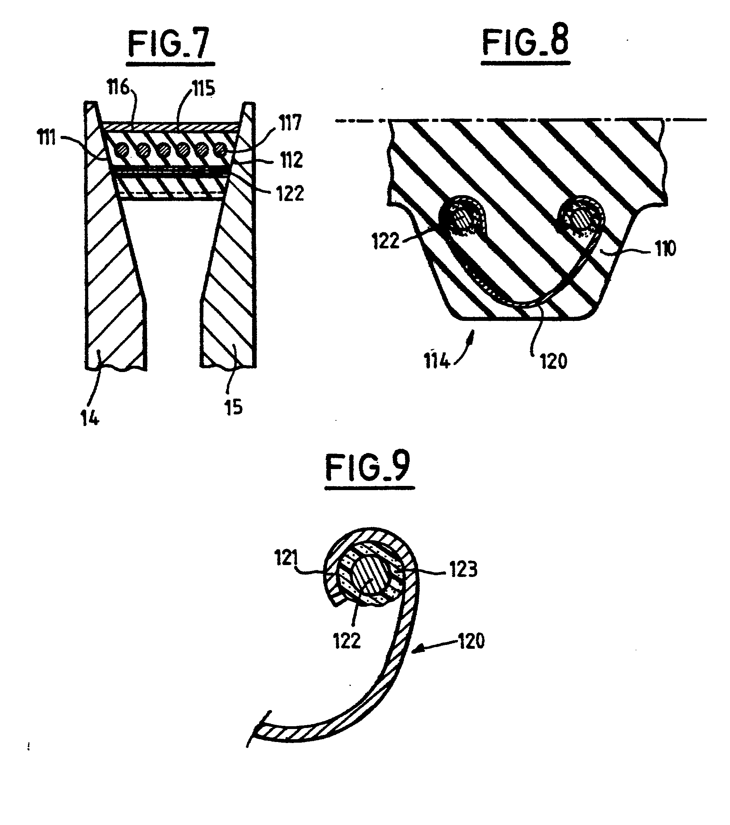

Dans la réalisation illustrée sur les figures 7 à 9, la matrice de matériau élastomère 110 est découpée sur sa face interne suivant des crans 114 et sa face externe 115 est garnie, le cas échéant, d'une ou de plusieurs couches de tissu caoutchouté 116, par exemple à base de coton, une couche de câblés 117 servant de support de traction.

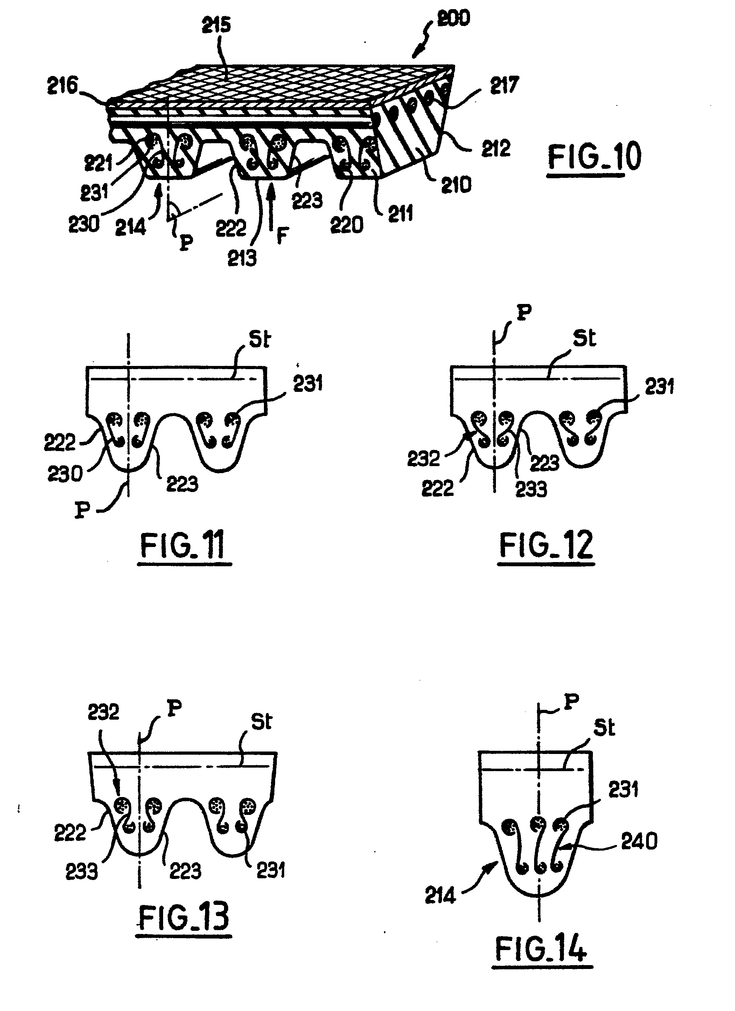

Dans chacun des crans 114 est logé un renfort 120, figure 8, à bords libres 121, figure 9, roulés ou partiellement rabattus vers l'intérieur ou vers l'extérieur de la gouttière et dans lesquels sont logés des inserts 122 à section droite circulaire ou polygonale qui régnent dans les crans 114 d'un flanc 111 à l'autre 112 de la courroie, figure 7.

Les inserts 122 peuvent être constitués par des fils métalliques, comme des cordes à piano ou des câblés métalliques tressés, des câblés en fibres synthétiques connus sous la marque KEVLAR ou encore des cordes de caoutchouc ou d'autres matériaux élastomères.

Pour leur mise en place dans les renforts 120 et les crans 114 les inserts 122 sont avantageusement enrobés d'un agent de collage ou d'une dissolution de caoutchouc sous forme d'une gaine 123 interposée entre le renfort 120 et ses bords libres 121, figure 9.

La présence des inserts 122, qui s'opposent à la déformation des bords libres des renforts 120, - sans toutefois s'opposer à la déformation desdits renforts dans le sens longitudinal de la courroie lors du passage de celle-ci entre les flasques 14 et 15 de la poulie -, contribue à la rigidité transversale de la courroie sans qu'il soit porté atteinte à sa souplesse longitudinale.

Dans les réalisations des figures 10 à 14, la matrice 210 en matériau élastomère est à section droite trapézoïdale et à flancs nus 211 et 212. La matrice 210 est découpée sur sa face interne 213, suivant des crans 214 et sa face externe 215 est éventuellement garnie d'une ou de plusieurs couches de tissu caoutchouté 216, par exemple à base de coton. Dans la matrice 210 est noyée une couche de câbles 217 servant de support de traction et qui est de structure analogue à celle des réalisations précédemment décrites.

Dans chacun des crans 214, limité par des faces latérales 222 et 223, sont prévus des renforts 220 constitués par des organes bandulaires profilés en métal ou alliage métallique, ou en un lamifié de tissu élastomère et de feuillard métallique, ou en résine synthétique armée ou non armée, ou en des matériaux composites de ce type et dont la section droite n'est pas une courbe fermée mais présente un contour quelque peu ondulé, à bords 221 roulés ou partiellement rabattus. De façon plus précise, les renforts 220 ont, en section droite par un plan longitudinal moyen, une forme générale d'agrafe en C, ou de crochet en S, comme bien montré sur les figures 11 et 12, respectivement, et ils sont disposés dans les crans 214 de manière que leur âme centrale soit inclinée par rapport à la direction du support de traction 217, de sorte qu'ils n'introduisent pas de résistance susceptible de s'opposer à une déformation de la matrice élastomère 210 dans le sens radial, qui est celui montré par la flèche F sur la figure 10.

De préférence, également, l'âme des profilés en C ou en S est disposée dans les crans 214 de manière à être dirigée sensiblement parallèlement à une face latérale 222 ou 223 de chacun des crans.

Dans la réalisation selon la figure 10, qui fait application de profilés à section droite en C, disposés par paires dans chaque cran de part et d'autre du plan transversal moyen P du cran, l'âme centrale 230 de chacun des renforts est plus proche du plan P que les retours ou bords 221, à l'intérieur desquels peuvent être disposés des inserts 231 s'étendant sensiblement d'un flanc à l'autre de la courroie, comme pour la réalisation des figures 7 à 9.

Dans la réalisation selon la figure 11, les renforts sont disposés à symétrie de miroir par rapport au plan moyen P de chaque cran mais avec leur âme 230 dirigée sensiblement parallèlement à la face latérale 222 ou 223 de chaque cran à laquelle ils sont adjacents et plus proches desdites faces que dudit plan P.

Dans la réalisation selon la figure 12, les organes bandulaires 232 ont une section droite en forme de crochet en S, avec une âme centrale 233 inclinée sur la direction longitudinale du support de traction, montrée en <u>St</u>. Comme dans les réalisations des figures 10 et 11, les renforts 232 sont, dans chaque cran, disposés avec leur âme centrale dirigée quelque peu parallèlement à une face latérale 222 ou 223 du cran dans lequel ils sont incorporés.

Dans la réalisation selon la figure 13 qui fait elle aussi application de renforts à section droite en S, la disposition dans chaque cran desdits renforts est symétrique par rapport au plan transversal moyen P. Dans cette réalisation, toutefois, et contrairement à celle montrée sur la figure 12, l'âme centrale 233 du renfort 232 la plus proche de la face latérale 222 est disposée parallèlement à l'autre face latérale 233 du cran dans lequel ledit renfort est inséré.

Dans la réalisation selon la figure 14, qui vise une courroie à crans 214 de plus grandes dimensions que ceux des réalisations décrites précédemment, les renforts 240 sont également à section droite en forme de S, disposés dans chaque cran en étant inclinés par rapport à la direction <u>St</u> du support de traction, de part et d'autre du plan transversal moyen P du cran et sensiblement dans ledit plan, les renforts étant ici associés par trois dans chaque cran et non plus par paires comme dans les réalisations précédentes

## Revendications

1. Courroie trapézoïdale crantée (10) de transmission de puissance comprenant un corps formé d'une matrice (16) en élastomère dans laquelle est noyée une couche de câbles métalliques (23) ou de fils câblés en matières textile, naturelles ou synthétiques, servant de support de traction, et, à l'intérieur des crans (20), des renforts (26) dirigés sensiblement transversalement par rapport à la courroie (10), caractérisée en ce que lesdits renforts (26) ont, en section droite, une forme "ouverte" quelque peu analogue à une gouttière à bords libres roulés ou partiellement rabattus et qui est déformable dans le sens longitudinal de la courroie.

2. Courroie selon la revendication 1,caractérisée en ce que les bords roulés (40, 41) ou partiellement rabattus sont dirigés vers l'intérieur de la gouttière.

3. Courroie selon la revendication 1,caractérisée en ce que les bords roulés (42, 43) ou partiellement rabattus sont dirigés vers l'extérieur de la gouttière.

4. Courroie selon l'une quelconque des revendications précédentes, caractérisée en ce que les renforts(26) comprennent des faces latérales (31, 32) et/ou de fond (35) qui sont nervurées ou ondulées (45, 46 - 44) pour accroître la rigidité transversale de la courroie dans laquelle sont insérés les renforts (26).

5. Courroie selon l'une quelconque des revendications précédentes, caractérisée en ce que les renforts(26) sont placés dans chacun des crans de manière telle que leurs faces latérales (31, 32) soient sensiblement parallèles aux faces (33, 34) des crans (20) dans laquelle ils sont incorporés.

6. Courroie selon l'une quelconque des revendications précédentes, caractérisée en ce que la partie ouverte du renfort (26) est disposée de manière à faire face vers l'extérieur de la courroie.

7. Courroie selon l'une quelconque des revendications 1 à 5, caractérisée en ce que la partie ouverte du renfort (26)est dirigée vers l'intérieur de la courroie.

8. Courroie selon l'une quelconque des revendications précédentes, caractérisée en ce que la longueur des renforts (26) est inférieure ou sensiblement égale à la largeur de la courroie.

9. Courroie selon l'une quelconque des revendications précédentes, caractérisée en ce que les renforts(26) sont en un matériau métallique, comme de l'acier inoxydable, de l'aluminium, des alliages d'aluminium ou des alliages cuivreux.

10. Courroie selon l'une quelconque des revendications 1 à 8, caractérisée en ce que les renforts (26) sont un matériau à base de résine synthétique armée ou non armée par des fibres naturelles et/ou synthétiques.

11. Courroie selon l'une quelconque des revendications 1 à 8, caractérisée en ce que les renforts sont formés en un matériau composite, comme un lamifié comportant un tissu de fibres naturelles et/ou synthétiques, un élastomère et un feuillard métallique.

12. Courroie selon l'une quelconque des revendications précédentes, caractérisée en ce qu'elle comprend au moins une couche de tissu caoutchouté sur sa face externe et au moins une couche de tissu caoutchouté (25) sur sa face interne.

13. Courroie selon l'une quelconque des revendications précédentes, caractérisée en ce que l'épaisseur du matériau constitutif des renforts (26) est comprise entre 3/100ème et 6/10ème de millimètres.

14.Courroie selon l'une quelconque des revendications précédentes, caractérisée en ce qu'elle comprend des inserts (122) s'étendant sensiblement de l'un à l'autre de ses flancs (111, 112) et logés dans les bords libres roulés ou partiellement rabattus (121) desdits renforts (120).

15. Courroie selon la revendication 14, caractérisée en ce que les inserts (122) sont choisis en correspondance des dimensions des bords libres roulés ou partiellement rabattus des renforts (120) et en ce que lesdits inserts ont, de préférence, une section droite à contour circulaire ou polygonal.

16. Courroie selon la revendication 14 ou la revendication 15, caractérisée en ce que les inserts (122) sont constitués par des fils métalliques, des cordes à piano ou des câblés métalliques tressés ou des câblés en fibres synthétiques comme ceux connus sous la marque KEVLAR ou encore des cordes de caoutchouc ou d'autres élastomères.

17. Courroie selon l'une quelconque des revendications 14 à 16, caractérisée en ce que les inserts (122) sont enrobés d'un agent de collage ou d'une dissolution de caoutchouc qui forment une gaine (123) entre lesdits renforts (120) et leurs bords libres roulés ou partiellement rabattus (121).

18. Courroie selon la préambule de la revendication 1, caractérisée en ce que les renforts (220, 232, 240) sont ménagés par des organes bandulaires ayant en section droite par un plan longitudinal une forme générale d'agrafe en C ou de crochet en S dont l'âme centrale est, dans chaque cran, inclinée sur la direction du support de traction (217, St) de sorte qu'ils ne font pas obstacle à une déformation de la matrice en élastomère dans le sens radial (flèche F).

19. Courroie selon la revendication 18, caractérisée en ce que les renforts sont disposés dans chaque cran (214) dans lequel ils sont incorporés de manière que leur âme centrale soit dirigée sensiblement parallèlement à une face latérale (222, 223) dudit cran (214).

20. Courroie selon les revendications 18 et 19, caractérisée en ce que les renforts (220, 232) sont associés par pairesdans chacun des crans dans lesquels ils sont incorporés.

21. Courroie selon la revendication 18, caractérisée en ce que, notamment pour des crans de dimensions relativement grandes, les renforts bandulaires (240) sont groupés dans chacun des crans suivant une multiplicité (trois ou davantage).

22. Courroie selon la revendication 20, caractérisée en ce que dans chacun des crans (214) les renforts (220, 232) sont disposés à symétrie de miroir par rapport au plan transversal moyen (P) dudit cran (214).

## Claims

1. A toothed power transmission V-belt (10) comprising a body constituted by an elastomer matrix (16) in which a layer of cords (23) is embedded, the cords being made of metal, or of braided natural or synthetic textile threads and serving to provide traction reinforcement, the belt also having reinforcement members (26) embedded in each of its teeth. (20), the reinforcement members (26) being directly substantially transversely relative to the belt (10), the belt being characterized in that said reinforcement members (26) have an "open"-shaped right cross-section somewhat analogous to a gutter having its free edges rolled or partially folded over and being deformable in the longitudinal direction of the belt.

2. A belt according to claim 1, characterized in that the rolled or partially folded-over edges (40, 41) are directed towards the inside of the gutter.

3. A belt according to claim 1, characterized in that the rolled or partially folded-over edges (42, 43) are directed towards the outside of the gutter.

4. A belt according to any preceding claim, characterized in that the reinforcement members (26) include side faces (31, 32) and/or bottoms (35) which are ribbed or corrugated (45, 46–44) in order to increase the transverse stiffness of the belt in which the reinforcement members (26) are inserted.

5. A belt according to any preceding claim, characterized in that the reinforcement members (26) are placed in each of the teeth in such a manner that their side faces (31, 32) lie substantially parallel to the faces (33, 34) of the teeth (20) in which they are incorporated.

6. A belt according to any preceding claim, characterized in that the open portions of the reinforcement members (26) are disposed to face towards the outside of the belt.

7. A belt according to any one of claims 1 to 5, characterized in that the open portions of the reinforcement members (26) are directed towards the inside of the belt.

8. A belt according to any preceding claim, characterized in that the length of the reinforcement members (26) is less than or substantially equal to the width of the belt.

9. A belt according to any preceding claim, characterized in that the reinforcement members (26) are made of metal, such as stainless steel, aluminium, aluminium alloys, or copper alloys.

10. A belt according to any one of claims 1 to 8, characterized in that the reinforcement members (26) are made of a material based on synthetic resin optionally reinforced by natural and/or synthetic fibers.

11. A belt according to any one of claims 1 to 8, characterized in that the reinforcement members are made of a composite material such as a laminate comprising a cloth of natural and/or synthetic fibers, an elastomer, and a metal foil.

12. A belt according to any preceding claim, characterized in that it includes at least one layer of rubberized cloth on its outside face and at least one layer of rubberized cloth (25) on its inside face.

13. A belt according to any preceding claim, characterized in that the thickness of the material constituting the reinforcement members (26) lies in the range 3/100 to 6/10 of a millimeter.

14. A belt according to any preceding claim, characterized in that it includes inserts (122) extending substantially from one flank of the belt to the other (111, 112) and received in the rolled or partially folded-over free edges (121) of said reinforcement members (120).

15. A belt according to claim 14, characterized in that the inserts (122) are selected to correspond to the size of the rolled or partially folded-over free edges of the reinforcement members (120) and in that said inserts preferably have a right cross-section which is circular or polygonal in outline.

16. A belt according to claim 14 or claim 15, characterized in that the inserts (122) are constituted by metal wires, piano wires, braided metal cords, cords made of synthetic fibers such as those known by the trademark Kevlar, or cording made of rubber or other elastomers.

17. A belt according to any one of claims 14 to 16, characterized in that the inserts (122) are coated with an agent for gluing or dissolving rubber, said agent forming a sheath (123) between each of said reinforcement members (120) and their rolled or partially folded-over free edges (121).

18. A belt according to the preamble of claim 1, characterized in that the reinforcement members (220, 232, 240) are constituted by strip members having a right cross-section in a longitudinal plane which is generally in the form of a C-shaped staple or an S-shaped hook having a central web which, in each tooth, is inclined relative to the direction of the traction reinforcement (217, St) so as to avoid opposing deformation of the elastomer matrix in the radial direction (arrow F).

19. A belt according to claim 18, characterized in that within each tooth (214) in which the reinforcement members are incorporated, the reinforcement members are disposed in such a manner that their central webs are directed substantially parallel to one or other of the side faces (222, 223) of said tooth (214).

20. A belt according to claims 18 and 19, characterized in that the reinforcement members (220, 232) are associated in pairs in each of the teeth in which they are incorporated.

21. A belt according to claim 18, characterized in that, in particular for teeth of relatively large dimensions, each of the teeth contains a multiplicity (three or more) of the strip reinforcement members (240).

22. A belt according to claim 20, characterized in that within each of the teeth (214) the reinforcement members (220, 232) are disposed in mirror symmetry about the mean transverse plane (P) through said tooth (214).

## Patentansprüche

1. Trapezförmiger gerippter Riemen (10) für die Kraftübertragung, umfassend einen Körper, der aus einem Grundmaterial (16) aus Elastomer gebildet ist, in welchem eine Lage von metallischen Kabeln (23) oder von verseilten Fäden aus natürlichem oder synthetischem Textilmaterial versenkt ist, die als Traktionsträger dient, und im Inneren der Rippen (20) mit Verstärkungen (26), die im wesentlichen quer mit Bezug auf den Riemen (10) gerichtet sind, dadurch gekennzeichnet, daß die Verstärkungen (26) im Querschnitt eine "geöffnete" Form, ein wenig analog einer Rinne mit eingerollten oder teilweise umgebogenen freien Rändern haben und die in der Längsrichtung des Riemens deformierbar ist.

2. Riemen nach Anspruch 1, dadurch gekennzeichnet, daß die eingerollten (40, 41) oder teilweise umgebogenen Ränder nach dem Inneren der Rinne gerichtet sind.

3. Riemen nach Anspruch 1, dadurch gekennzeichnet, daß die eingerollten (42, 43) oder teilweise umgebogenen Ränder nach dem Äußeren der Rinne gerichtet sind.

4. Riemen nach irgendeinem der vorhergehenden Ansprüche, dadurch gekennzeichnet, daß die Verstärkungen (26) seitliche Flächen (31, 32) und/oder Bodenflächen (35) umfassen, die gerippt oder gewellt (45, 46–44) sind, um die Quersteifigkeit des Riemens, in welchen die Verstärkungen (26) eingebettet sind, zu vergrößern.

5. Riemen nach irgendeinem der vorhergehenden Ansprüche, dadurch gekennzeichnet, daß die Verstärkungen (26) in jeder der Rippen in der Weise angeordnet sind, daß ihre seitlichen Flächen (31, 32) im wesentlichen parallel zu den Flächen (33, 34) der Rippen (20) sind, in denen sie eingebaut sind.

6. Riemen nach irgendeinem der vorhergehenden Ansprüche, dadurch gekennzeichnet, daß der geöffnete Teil der Verstärkung (26) in der Weise angeordnet ist, daß er nach dem Äußeren des Riemens zugekehrt ist.

7. Riemen nach irgendeinem der Ansprüche 1 bis 5, dadurch gekennzeichnet, daß der geöffnete Teil der Verstärkung (26) nach dem Inneren des Riemens zu gerichtet ist.

8. Riemen nach irgendeinem der vorhergehenden Ansprüche, dadurch gekennzeichnet, daß die Länge der Verstärkungen (26) kleiner oder im wesentlichen gleich der Breite des Riemens ist.

9. Riemen nach irgendeinem der vorhergehenden Ansprüche, dadurch gekennzeichnet, daß die Verstärkungen (26) aus einem metallischen Material, wie nichtrostendem Stahl, Aluminium, Aluminiumlegierungen oder Kupferlegierungen, sind.

10. Riemen nach irgendeinem der Ansprüche 1 bis 8, dadurch gekennzeichnet, daß die Verstärkungen (26) aus einem Material auf der Basis von synthetischem Harz sind, das durch natürliche und/oder synthetische Fasern verstärkt oder nicht verstärkt ist.

11. Riemen nach irgendeinem der Ansprüche 1 bis 8, dadurch gekennzeichnet, daß die Verstärkungen aus einem Verbundmaterial ausgebildet sind, wie einem Laminat, das einen Stoff aus natürlichen und/oder synthetischen Fasern, ein Elastomer und ein metallisches Band umfaßt.

12. Riemen nach irgendeinem der vorhergehenden Ansprüche, dadurch gekennzeichnet, daß er wenigstens eine Lage von gummiertem Stoff auf seiner äußeren Seite und wenigstens eine Lage von gummiertem Stoff (25) auf seiner inneren Seite aufweist.

13. Riemen nach irgendeinem der vorhergehenden Ansprüche, dadurch gekennzeichnet, daß die Dicke des die Verstärkungen (26) bildenden Materials zwischen 3/100 und 6/10 mm liegt.

14. Riemen nach irgendeinem der vorhergehenden Ansprüche, dadurch gekennzeichnet, daß er Einsätze (122) umfaßt, die sich im wesentlichen von der einen seiner Flanken (111, 112) nach der anderen erstrecken und in den eingerollten oder teilweise umgebogenen freien Rändern (121) der Verstärkungen (120) untergebracht sind.

15. Riemen nach Anspruch 14, dadurch gekennzeichnet, daß die Einsätze (122) in Entsprechung zu den Dimensionen der eingerollten oder teilweise eingebogenen freien Rändern der Verstärkungen (120) gewählt sind, und daß die Einsätze vorzugsweise einen Querschnitt mit kreisförmiger oder polygonaler Kontur haben.

16. Riemen nach Anspruch 14 oder Anspruch 15, dadurch gekennzeichnet, daß die Einsätze (122) von metallischen Drähten, Klavierseiten oder geflochtenen metallischen Kabeln oder von Kabeln aus synthetischen Fasern, wie solchen, die unter der Marke KLEVAR bekannt sind, oder auch von Schnuren aus Kautschuk oder anderen Elastomeren gebildet sind.

17. Riemen nach irgendeinem der Ansprüche 14 bis 16, dadurch gekennzeichnet, daß die Einsätze (122) von einem Klebemittel oder einer Kautschukdissolution ummantelt sind, das bzw. die einen Mantel (123) zwischen den Verstärkungen (120) und ihren eingerollten oder teilweise umgebogenen freien Rändern (121) bilden.

18. Riemen nach dem Oberbegriff des Anspruchs 1, dadurch gekennzeichnet, daß die Verstärkungen (220, 232, 240) durch bandartige Organe bewerkstelligt sind, die einen Querschnitt durch eine Längsebene in einer allgemeinen Form einer Spange in C oder eines Hakens in S haben, deren bzw. dessen mittiger Steg in jeder Rippe nach der Richtung des Traktionsträgers (217, St) in der Weise geneigt ist, daß er kein Hindernis für eine Deformation des Grundmaterials aus Elastomer in der Radialrichtung (Pfeil F) bildet.

19. Riemen nach Anspruch 18, dadurch gekennzeichnet, daß die Verstärkungen in jeder Rippe (214), in der sie eingebaut sind, in der Weise angeordnet sind, daß ihr mittiger Steg im wesentlichen parallel zu einer Seitenfläche (222, 223) dieses Stegs (214) gerichtet ist.

20. Riemen nach den Ansprüchen 18 und 19, dadurch gekennzeichnet, daß die Verstärkungen (220, 232) zu Paaren in jeder der Rippen, in denen sie eingebaut sind, vereinigt sind.

21. Riemen nach Anspruch 18, dadurch gekennzeichnet, daß, insbesondere für Rippen von relativ großen Dimensionen, die bandförmigen Verstärkungen (240) in jeder der Rippen gemäß einer Mehrzahl (3 oder mehr) gruppiert sind.

22. Riemen nach Anspruch 20, dadurch gekennzeichnet, daß in jeder der Rippen (214) die Verstärkungen (220, 232) in Spiegelsymmetrie bezüglich einer Quermittelebene (P) dieser Rippe (214) angeordnet sind.

FIG.1

FIG.2

FIG. 3

FIG.4

FIG.5

FIG.5a

FIG.6a

FIG.6b

FIG.6c

FIG.6d

FIG.6e

FIG.6f

## FIG.7

## FIG.8

## FIG.9

FIG.10

FIG.11

FIG.12

FIG.13

FIG.14